# EUROPEAN PATENT SPECIFICATION

(11) **EP 4 499 909 B1**
(45) Date of publication and mention of the grant of the patent: **09.09.2026**
(21) Application number: 23719186.1
(22) Date of filing: 31.03.2023
(51) Int. Cl.: D04H 1/587, D04H 1/64, D04H 1/4209, D04H 1/4218, C03C 25/323

(54) **AQUEOUS BINDER COMPOSITIONS HAVING IMPROVED PERFORMANCE**
WÄSSRIGE BINDEMITTELZUSAMMENSETZUNGEN MIT VERBESSERTER LEISTUNG
COMPOSITIONS DE LIANT AQUEUSES AYANT DES PERFORMANCES AMÉLIORÉES

(30) Priority: 31.03.2022 US 202263325780 P
(43) Date of publication of application: 05.02.2025
(73) Proprietor: Owens Corning Intellectual Capital, LLC, Toledo, OH 43659 (US)
(72) Inventor: ZHANG, Xiujuan, New Albany, Ohio 43054 (US); MUELLER, Gert, New Albany, Ohio 43054 (US); CHEN, Liang, New Albany, Ohio 43054 (US)
(74) Representative: Novagraaf Group
(86) International application number: PCT/US2023/017026
(87) International publication number: WO 2023/192558

(56) References cited:
- WO-A1-2015/144843
- WO-A1-2017/074853
- WO-A1-2021/118951
- WO-A1-2022/051213
- US-B2- 8 808 443

## Description

### FIELD

The present disclosure relates to aqueous binder compositions. More particularly, the present disclosure relates to aqueous binder compositions for use in the formation of fibrous insulation products.

### BACKGROUND

WO2015/144843 (to Ursa Insulation, S.A.) relates to curable formaldehyde-free resin dispersions for the manufacture of mineral fiber products such as mineral wool insulating products.

Aqueous binder compositions are traditionally utilized in the formation of woven and non-woven fibrous products, such as insulation products, composite products, wood fiber board, and the like. Insulation products, (*e.g*., fiberglass and mineral wool insulation products), are typically manufactured by fiberizing a molten composition of glass, rock, or other mineral and spinning fine fibers from a fiberizing apparatus, such as a rotating spinner. To form an insulation product, fibers produced by the rotating spinner are drawn downwardly from the spinner towards a conveyor by a blower. As the fibers move downward, a binder material is sprayed onto the fibers and the fibers are collected into a high loft, continuous blanket on the conveyor. The binder material gives the insulation product resiliency for recovery after packaging, and provides stiffness and handleability so that the insulation product can be handled and applied as needed. The binder composition also provides protection to the fibers from interfilament abrasion, and promotes compatibility between the individual fibers. The blanket containing the binder-coated fibers is then passed through a curing oven, and the binder is cured to set the blanket to a desired thickness.

After the binder has cured, the fibrous insulation may be cut into lengths to form individual insulation products, and the insulation products may be packaged for shipping to customer locations. Insulation products prepared in this manner can be provided in various forms including batts, blankets, and boards (heated and compressed batts) for use in different applications.

Traditional binder compositions used for fiberglass and mineral wool insulation products are based on phenol-formaldehyde ("PF") resins, as well as PF resins extended with urea ("PUF resins"). However, while such binder compositions provide suitable properties to the insulation products, formaldehyde binders emit undesirable emissions during the manufacturing process, and there has been a desire to move away from the use of formaldehyde-based binders.

As an alternative to formaldehyde-based binders, certain formaldehyde-free formulations have been developed for use as a binder in fibrous insulation products. Such formaldehyde-free formulations may include a polycarboxylic acid with a polyhydroxy component that are intended to crosslink via an esterification reaction. However, many such formaldehyde-free binders tend to be sticky and possess a higher viscosity than desirable, which causes issues during processing (*i.e.,* products sticking to processing equipment). Prior attempts to alleviate these viscosity issues by simply diluting the binder composition with water has resulted in insufficient binder cure, or alternatively, excess energy uses to reach optimal binder cure.

Accordingly, there is a need for an environmentally friendly, low viscosity formaldehyde-free binder composition for use in the product of fiberglass or mineral wool insulation products. In particular, a need exists for ultra-low viscosity formaldehyde-free binder compositions exhibiting improved processability and the ability to produce insulation products with improved performance.

### SUMMARY

The present invention is directed to aqueous binder compositions having improved performance. The aqueous binder composition comprises from 15 to 70 wt.% of a polymeric polycarboxylic acid, from 1 to 30 wt.% of a monomeric polycarboxylic acid, and from 25 to 50 wt.% of a monomeric polyol having at least three hydroxyl groups, wherein each wt.% is based on the total solids content of the aqueous binder composition, and wherein the weight ratio of the polymeric polycarboxylic acid to the monomeric polycarboxylic acid is from 0.5:1 to 14:1. It has been found that the selection of a particular weight ratio of polymeric polycarboxylic acid to monomeric polycarboxylic acid, at a particular concentration of monomeric polyol, provides improved performance to the aqueous binder composition in comparison to other formaldehyde-free binder formulations. Particular embodiments are defined in the dependent claims.

An aqueous binder composition comprising from 15 to 70 wt.% of a polymeric polycarboxylic acid, from 1 to 30 wt.% a monomeric polycarboxylic acid, and from 25 to 55 wt.% of a monomeric polyol having at least three hydroxyl groups, wherein each wt.% is based on the total solids content of the aqueous binder composition is also described. With respect to the polymeric polycarboxylic acid, the monomeric polycarboxylic acid, and the monomeric polyol, the ratio of molar equivalents of hydroxyl groups to carboxylic acid groups is from 0.5:1 to 2.5:1. Additionally, the weight ratio of the polymeric polycarboxylic acid to the monomeric polycarboxylic acid is from 0.5:1 to 14:1.

A fibrous insulation product is also described. The fibrous insulation product comprises a plurality of randomly oriented fibers and an aqueous binder composition of the present invention at least partially coating the fibers. The aqueous binder composition may comprise from 20 to 40 wt.% of a polymeric polycarboxylic acid, from 5 to 30 wt.% a monomeric polycarboxylic acid, and from 25 to 50 wt.% of a monomeric polyol having at least three hydroxyl groups, wherein each wt.% is based on the total solids content of the aqueous binder composition, and wherein the weight ratio of the polymeric polycarboxylic acid to the monomeric polycarboxylic acid is from 0.5:1 to 5:1.

### DESCRIPTION OF THE FIGURES

The advantages of the present invention will be apparent upon consideration of the following detailed disclosure, especially when taken in conjunction with the accompanying drawings wherein:
Figure 1 is a plot showing the improved elastic modulus performance imparted by the inventive binder compositions; and
Figure 2 is a plot showing the improved (*i.e.,* lower) level of water-soluble material imparted by the inventive binder compositions.

### DETAILED DESCRIPTION

Disclosed herein are aqueous binder compositions having reduced viscosity and improved processability. While the present disclosure describes certain embodiments of the aqueous binder compositions in detail, the present disclosure is to be considered exemplary and is not intended to be limited to the disclosed embodiments.

The terminology as set forth herein is for description of the embodiments only and should not be construed as limiting the disclosure as a whole. All references to singular characteristics or limitations of the present disclosure shall include the corresponding plural characteristic or limitation, and vice versa, unless otherwise specified or clearly implied to the contrary by the context in which the reference is made. Unless otherwise specified, "a," "an," "the," and "at least one" are used interchangeably. Furthermore, as used in the description and the appended claims, the singular forms "a," "an," and "the" are inclusive of their plural forms, unless the context clearly indicates otherwise.

To the extent that the term "includes" or "including" is used in the description or the claims, it is intended to be inclusive in a manner similar to the term "comprising" as that term is interpreted when employed as a transitional word in a claim. Furthermore, to the extent that the term "or" is employed (*e.g.,* A or B) it is intended to mean "A or B or both." When the applicants intend to indicate "only A or B but not both" then the term "only A or B but not both" will be employed. Thus, use of the term "or" herein is the inclusive, and not the exclusive use.

The aqueous binder compositions of the present disclosure can comprise, consist of, or consist essentially of the essential elements of the disclosure as described herein, as well as any additional or optional element described herein, or which is otherwise useful in binder applications.

All ranges and parameters, including but not limited to percentages, parts, and ratios, disclosed herein are understood to encompass any and all sub-ranges assumed and subsumed therein, and every number between the endpoints. For example, a stated range of "1 to 10" should be considered to include any and all sub-ranges beginning with a minimum value of 1 or more and ending with a maximum value of 10 or less (*e.g.,* 1 to 6.1, or 2.3 to 9.4), and to each integer (1, 2, 3, 4, 5, 6, 7, 8, 9, and 10) contained within the range.

Unless otherwise specified, the terms "binder composition," "aqueous binder composition," "binder formulation," "binder," and "binder system" may be used interchangeably herein.

Unless otherwise specified, the terms "formaldehyde-free" and "no added formaldehyde" are be used interchangeably herein.

Any combination of method or process steps as used herein may be performed in any order, unless otherwise specified or clearly implied to the contrary by the context in which the referenced combination is made.

The present invention relates to improved formaldehyde-free aqueous binder compositions comprising a polymeric polycarboxylic acid, a monomeric polycarboxylic acid, and a monomeric polyol having at least three hydroxyl groups, wherein the selection of a particular weight ratio of polymeric polycarboxylic acid to monomeric polycarboxylic provides an improved binder performance. The improved binder performance includes, *e.g*., improved viscosity, the ability to produce an insulation product with improved tensile strength, reduced water soluble material, and improved elastic modulus.

In accordance with the present disclosure, the aqueous binder composition comprises at least one polymeric polycarboxylic acid. In embodiments of the present disclosure, the polymeric polycarboxylic acid comprises a homopolymer or copolymer of acrylic acid, or salts or anhydrides thereof. In embodiments of the present disclosure, the polymeric polycarboxylic acid comprises polyacrylic acid, salts of polyacrylic acid, or anhydrides of polyacrylic acid. In embodiments of the present disclosure, the polymeric polycarboxylic acid may comprise, or consist of, polyacrylic acid. In embodiments of the present disclosure, the polymeric polycarboxylic acid comprises a polyacrylic acid-based resin. Exemplary polyacrylic acid-based resins include, but are not limited to, ACUMER^{™} 9932, which is a polyacrylic acid/sodium hypophosphite resin commercially available from The Dow Chemical Company (Midland, Michigan), and commercially available polyacrylic/glycerin-based resins.

In accordance with the present disclosure, the aqueous binder composition comprises greater than 15 wt.% of a polymeric polycarboxylic acid, based on the total solids content of the aqueous binder composition, including, greater than 16 wt.%, greater than 17 wt.%, greater than 18 wt.%, greater than 19 wt.%, greater than 20 wt.%, greater than 25 wt.%, greater than 30 wt.%, greater than 35 wt.%, greater than 40 wt.%, greater than 45 wt.%, and greater than 50 wt.% of a polymeric polycarboxylic acid, based on the total solids content of the aqueous binder composition. The aqueous binder composition comprises from 15 to 70 wt.% of a polymeric polycarboxylic acid, based on the total solids content of the aqueous binder composition, including from 17 to 65 wt.%, from 20 to 60 wt.%, from 20 to 50 wt.%, from 20 to 40 wt.%, from 22 to 38 wt.%, and from 25 to 35 wt.% of a polymeric polycarboxylic acid, based on the total solids content of the aqueous binder composition.

In accordance with the present disclosure, the aqueous binder composition comprises at least one monomeric polycarboxylic acid. In embodiments of the present disclosure, the monomeric polycarboxylic acid comprises a tricarboxylic acid. In embodiments of the present disclosure, the monomeric polycarboxylic acid comprises aconitic acid, adipic acid, azelaic acid, butane tetra carboxylic acid dihydrate, butane tricarboxylic acid, chlorendic anhydride, citraconic acid, citric acid, dicyclopentadiene-maleic acid adducts, diethylenetriamine pentacetic acid pentasodium salt, adducts of dipentene and maleic anhydride, endomethylenehexachlorophthalic anhydride, ethylenediamine tetraacetic acid (EDTA), fully maleated rosin, maleated tall oil fatty acids, fumaric acid, glutaric acid, isophthalic acid, itaconic acid, maleated rosin-oxidize unsaturation with potassium peroxide to alcohol then carboxylic acid, malic acid, maleic anhydride, mesaconic acid, oxalic acid, phthalic anhydride, sebacic acid, succinic acid, tartaric acid, terephthalic acid, tetrabromophthalic anhydride, tetrachlorophthalic anhydride, tetrahydrophthalic anhydride, trimellitic anhydride, or trimesic acid. In embodiments of the present disclosure, the monomeric polycarboxylic acid comprises citric acid, salts of citric acid, or anhydrides of citric acid. In embodiments of the present disclosure, the monomeric polycarboxylic acid comprises, or consists of, citric acid.

In accordance with the present disclosure, the aqueous binder composition comprises an amount up to 40 wt.% of a monomeric polycarboxylic acid, based on the total solids content of the aqueous binder composition, including an amount up to 35 wt.%, up to or less than 30 wt.%, including up to 29 wt.%, up to 28 wt.%, up to 27 wt.%, up to 26 wt.%, up to 25 wt.%, up to 24 wt.%, up to 23 wt.%, up to 22 wt.%, up to 21 wt.%, up to 20 wt.%, up to 15 wt.%, and up to 10 wt.% of a monomeric polycarboxylic acid, based on the total solids content of the aqueous binder composition. The aqueous binder composition comprises from 1 to 30 wt.% of a monomeric polycarboxylic acid, based on the total solids content of the aqueous binder composition, including from 5 to 30 wt.%, from 7 to 30 wt.%, from 10 to 30 wt.%, from 10 to 28 wt.%, from 13 to 25 wt.%, from 15 to 23 wt.%, and from 17 to 20 wt.% of a monomeric polycarboxylic acid, based on the total solids content of the aqueous binder composition. In embodiments of the present disclosure, the aqueous binder composition comprises from 10 to less than 30 wt.% of a monomeric polycarboxylic acid, based on the total solids content of the aqueous binder composition.

In accordance with the present disclosure, the aqueous binder composition comprises at least one polyol. In embodiments of the present disclosure, the polyol may comprise a water-soluble compound having a molecular weight of less than 2,000 Daltons, including less than 750 Daltons, including less than 500 Daltons, including less than 250 Daltons, including less than 200 Daltons, including less than 175 Daltons. The polyol is a monomeric polyol having at least three hydroxyl groups. In embodiments of the present disclosure, the polyol comprises at least three hydroxyl groups, or at least four hydroxyl groups, or at least five hydroxyl groups. In embodiments of the present disclosure, the polyol comprises one or more of sugar alcohols, pentaerythritol, primary alcohols, 1,2,4-butanetriol, trimethylolpropane, or short-chain alkanolamines, such as triethanolamine, comprising at least three hydroxyl groups.

In accordance with the present disclosure, the polyol may comprise one or more sugar alcohols. The term "sugar alcohol" encompasses compounds obtained when the aldo or keto groups of a sugar are reduced (*e.g.,* by hydrogenation) to the corresponding hydroxy groups. The starting sugar may be chosen from monosaccharides, oligosaccharides, polysaccharides, or mixtures of those products, such as syrups, molasses, or starch hydrolyzates. The starting sugar may be a dehydrated form of a sugar. Although sugar alcohols closely resemble the corresponding starting sugars, they are not sugars. Thus, sugar alcohols have no reducing ability, and cannot participate in the Maillard reaction typical of reducing sugars. In embodiments of the present disclosure, the one or more sugar alcohols comprise erythritol, arabitol, xylitol, sorbitol, maltitol, mannitol, iditol, isomaltitol, lactitol, cellobitol, palatinitol, maltotritol, syrups thereof, or mixtures thereof. In embodiments of the present disclosure, the one or more sugar alcohols are selected from the group consisting of sorbitol, xylitol, syrups thereof, or mixtures thereof. In embodiments of the present disclosure, the one or more sugar alcohols consists of sorbitol. In embodiments of the present disclosure, the polyol comprises a dimeric or oligomeric condensation product of a sugar alcohol.

In accordance with the present disclosure, the aqueous binder composition may be devoid of reducing sugars. A reducing sugar is a type of carbohydrate or sugar that includes a free aldehyde or ketone group and can donate electrons to another molecule. As the binder composition is free of reducing sugars, it is unable to participate in a Maillard reaction, which is a process that occurs when a reducing sugar reacts with an amine. The Maillard reaction results in a binder composition with an undesirable brown color.

In accordance with the present disclosure, the aqueous binder composition comprises an amount up to 55 wt.% of a polyol, based on the total solids content of the aqueous binder composition, including an amount less than 55 wt.%, including up to 54 wt.%, up to 53 wt.%, up to 52 wt.%, up to 51 wt.%, up to 50 wt.%, up to 49 wt.%, up to 48 wt.%, up to 47 wt.%, up to 46 wt.%, up to 45 wt.%, up to 44 wt.%, and up to 43 wt.% of a polyol, based on the total solids content of the aqueous binder composition. The aqueous binder composition comprises from 25 to 50 wt.% of a polyol, based on the total solids content of the aqueous binder composition, including from 27 to 50 wt.%, from 30 to 48 wt.%, from 34 to 46 wt.%, and from 35 to 45 wt.% of a polyol, based on the total solids content of the aqueous binder composition. In embodiments of the present disclosure, the aqueous binder composition comprises from 22 to 40 wt.% of a polyol, based on the total solids content of the aqueous binder composition. In embodiments of the present disclosure, the aqueous binder composition comprises from 20 to 35 wt.% of a polyol, based on the total solids content of the aqueous binder composition. In embodiments of the present disclosure, the aqueous binder composition comprises from 40 to 55 wt.% of a polyol, based on the total solids content of the aqueous binder composition. In embodiments of the present disclosure, the aqueous binder composition comprises from 40 to 50 wt.% of a polyol, based on the total solids content of the aqueous binder composition.

In accordance with the present disclosure, the aqueous binder composition may be free or substantially free of polyols comprising less than 3 hydroxyl groups, or free or substantially free of polyols comprising less than 4 hydroxyl groups. In embodiments of the present disclosure, the aqueous binder composition is free or substantially free of polyols having a number average molecular weight of 2,000 Daltons or above, such as a molecular weight between 3,000 Daltons and 4,000 Daltons. Accordingly, in embodiments of the present disclosure, the aqueous binder composition is free or substantially free of diols, such as glycols; triols, such as, for example, glycerol and triethanolamine; or polymeric polyhydroxy compounds, such as polyvinyl alcohol, polyvinyl acetate (which may be partially or fully hydrolyzed), or mixtures thereof. In embodiments of the present disclosure, the aqueous binder composition is devoid of polyvinyl alcohol.

In accordance with the inventive features disclosed herein, it has been found that the selection of a particular weight ratio of polymeric polycarboxylic acid to monomeric polycarboxylic acid, at a particular concentration of monomeric polyol, provides improved performance to the aqueous binder composition. In accordance with the present disclosure, the weight ratio of the polymeric polycarboxylic acid to the monomeric polycarboxylic acid (*i.e*., [wt.% polymeric polycarboxylic acid]:[wt.% monomeric polycarboxylic acid]) is from 0.5:1 to 14:1, when the concentration of the monomeric polyol is from 5 to 55 wt.%. In accordance with the present disclosure, the weight ratio of the polymeric polycarboxylic acid to the monomeric polycarboxylic acid is from greater than 0.5:1 to less than 14:1, including from 0.5:1 to 5:1, including from 0.9:1 to 2:1, when the concentration of the monomeric polyol is from 5 to 55 wt.%.

In accordance with the inventive features disclosed herein, it has been found that with respect to the polymeric polycarboxylic acid, the monomeric polycarboxylic acid, and the monomeric polyol, the ratio of molar equivalents of hydroxyl groups to carboxylic acid groups is likewise indicative of binder performance. Specifically, it has been found that the selection of a ratio of molar equivalents of hydroxyl groups to carboxylic acid groups of from 0.5:1 to 2.5:1 provides improved performance to the binder composition, including a ratio of from 0.5:1 to 2.2:1, including from 0.5:1 to 2:1.

The aqueous binder composition disclosed herein may include a number of optional components in addition to the polymeric polycarboxylic acid, the monomeric polycarboxylic acid, and the polyol.

In some embodiments, the aqueous binder composition may optionally include an esterification catalyst, also known as a cure accelerator. The catalyst may comprise inorganic salts, Lewis acids (*e.g.,* aluminum chloride or boron trifluoride), Bronsted acids (*e.g.,* sulfuric acid, p-toluenesulfonic acid and boric acid) organometallic complexes (*e.g.*, lithium carboxylates, sodium carboxylates), or Lewis bases (*e.g*., polyethyleneimine, diethylamine, or triethylamine). The catalyst may comprise an alkali metal salt of a phosphorous-containing organic acid, in particular, alkali metal salts of phosphorus acid, hypophosphorus acid, or polyphosphoric acid. Exemplary phosphorus catalysts include, but are not limited to, sodium hypophosphite, sodium phosphate, potassium phosphate, disodium pyrophosphate, tetrasodium pyrophosphate, sodium tripolyphosphate, sodium hexametaphosphate, potassium phosphate, potassium tripolyphosphate, sodium trimetaphosphate, sodium tetrametaphosphate, or mixtures thereof. The catalyst or cure accelerator may be a fluoroborate compound such as fluoroboric acid, sodium tetrafluoroborate, potassium tetrafluoroborate, calcium tetrafluoroborate, magnesium tetrafluoroborate, zinc tetrafluoroborate, ammonium tetrafluoroborate, and mixtures thereof. The catalyst may be a mixture of phosphorus and fluoroborate compounds. Other sodium salts such as, sodium sulfate, sodium nitrate, or sodium carbonate may also or alternatively be used as the catalyst.

In embodiments of the present disclosure comprising a catalyst, the aqueous binder composition may comprise an amount up to 10 wt.% of the catalyst, based on the total solids content of the aqueous binder composition, including from 0.1 to 5 wt.%, including from 0.1 to 4.5 wt.%, including from 0.2 to 4 wt.%, including from 0.2 to 3.5 wt.%.

In some embodiments, the aqueous binder composition may optionally include one or more process aids. Process aids may function to facilitate the processing of the fibers, including, formation and orientation. Process aids may be used to improve binder application distribution uniformity, to reduce binder viscosity, to increase ramp height after forming, to improve the vertical weight distribution uniformity, or to accelerate binder de-watering in both forming and oven curing processes. Process aids may also be used to adjust the binder compositions based upon its ultimate use with glass fiber products or mineral wool fiber products.

Exemplary process aids include, but are not limited to, one or more surfactants, 1,2,4-butanetriol, 1,4-butanediol, 1,2-propanediol, 1,3-propanediol, polyethylene glycols (including, *e.g*., Carbowax^{™}, a polyethylene glycol commercially available from Dow Chemical Company), monooleate polyethylene glycol (MOPEG), silicone, dispersions of polydimethylsiloxane (PDMS), emulsions or dispersions of mineral, paraffin, or vegetable oils, waxes such as amide waxes (*e.g*., ethylene bis-stearamide (EBS)) and carnauba wax, hydrophobized silica, ammonium phosphates, short chain acids (*e.g*., monomeric acids or acids comprising a molecular weight less than 1000 Daltons such as, for example, succinic acid, glutaric acid, maleic acid, 1,2,3,4-butane tetracarboxylic acid, adipic acid, and the like, short chain alcohols (*e.g*., alcohols having a molecular weight of less than 2,000 Daltons, including less than 750 Daltons, less than 500 Daltons, less than 250 Daltons, less than 200 Daltons, or less than 175 Daltons), such as, for example, glycerol, erythritol, arabitol, xylitol, maltitol, mannitol, iditol, isomaltitol, lactitol, cellobitol, palatinitol, maltotritol, syrups thereof, and the like), or combinations thereof.

In accordance with the present disclosure, two or more process aids may be used in combination to form an additive blend including a mixture of at least two processing aids, a mixture of at least three processing aids, or a mixture of at least four processing aids. In some embodiments, the additive blend comprises a mixture of glycerol and polydimethylsiloxane.

In embodiments of the present disclosure comprising a single process aid or an additive blend, the aqueous binder composition may comprise up to 20 wt.% of the process aid or additive blend, based on the total solids content of the aqueous binder composition, including at least 0.1 wt.%, including at least 0.2 wt.%, including at least 0.5 wt.%, including at least 1 wt.%, including at least 1.5 wt.%, including at least 2 wt.%, including from 0.1 to 5 wt.%, including from 0.1 to 4 wt.%, including from 0.1 to 3.5 wt.%, including from 0.5 to 3 wt.%, including from 1 to 2.5 wt.%. In embodiments of the present disclosure comprising a single process aid or an additive blend, the aqueous binder composition may comprise at least 7 wt.% of the process aid or additive blend, based on the total solids content of the aqueous binder composition, including at least 8 wt.%, including at least 9 wt.%, including from 7 to 15 wt.%, including from 8 to 13.5 wt.%, including from 9 to 12.5 wt.%.

In embodiments of the present disclosure wherein the process aid comprises glycerol, the aqueous binder composition may comprise at least 5 wt.% of the glycerol, based on the total solids content of the aqueous binder composition, including at least 6 wt.%, including at least 7 wt.%, including at least 7.5 wt.%, including from 5 to 15 wt.%, including from 6.5 to 13 wt.%, including from 7 to 12 wt.%, including from 7.5 to 11 wt.%.

In embodiments of the present disclosure wherein the process aid comprises polydimethylsiloxane, the aqueous binder composition may comprise at least 0.2 wt.% of the polydimethylsiloxane, based on the total solids content of the aqueous binder composition, including at least 0.5 wt.%, including at least 0.8 wt.%, including at least 1 wt.%, including at least 1.5 wt.%, including at least 2 wt.%, including from 0.5 to 5 wt.%, including from 1 to 4 wt.%, including from 1.2 to 3.5 wt.%, including from 1.5 to 3 wt.%, including from 1.6 to 2.3 wt.%.

In embodiments of the present disclosure wherein the process aid comprises an additive blend of glycerol and polydimethylsiloxane, the aqueous binder composition may comprise from 5 to 15 wt.% of the glycerol and 0.5 to 5 wt.% of the polydimethylsiloxane, based on the total solids content of the aqueous binder composition. In embodiments of the present disclosure wherein the process aid comprises a blend of glycerol and polydimethylsiloxane, the aqueous binder composition may comprise from 7 to 12 wt.% of the glycerol and 1.2 to 3.5 wt.% of the polydimethylsiloxane, based on the total solids content of the aqueous binder composition.

Further exemplary process aids may include one or more surfactants. The one or more surfactants may be included in the binder composition to assist in binder atomization, wetting, and interfacial adhesion. Exemplary surfactants include, but not limited to, ionic surfactants (*e.g.,* sulfate, sulfonate, phosphate, and carboxylate); sulfates (*e.g.,* alkyl sulfates, ammonium lauryl sulfate, sodium lauryl sulfate (SDS), alkyl ether sulfates, sodium laureth sulfate, and sodium myreth sulfate); amphoteric surfactants (*e.g*., alkylbetaines, such as lauryl betaine); sulfonates (*e.g*., dioctyl sodium sulfosuccinate, perfluorooctanesulfonate, perfluorobutanesulfonate, and alkyl benzene sulfonates); phosphates (*e.g*., alkyl aryl ether phosphate and alkyl ether phosphate); carboxylates (*e.g*., alkyl carboxylates, fatty acid salts (soaps), sodium stearate, sodium lauroyl sarcosinate, carboxylate fluorosurfactants, perfluoronanoate, and perfluorooctanoate); cationic (*e.g*., alkylamine salts such as laurylamine acetate); pH dependent surfactants (*e.g*., primary, secondary or tertiary amines); permanently charged quaternary ammonium cations (*e.g*., alkyltrimethylammonium salts, cetyl trimethylammonium bromide, cetyl trimethylammonium chloride, cetylpyridinium chloride, and benzethonium chloride); zwitterionic surfactants; quaternary ammonium salts (*e.g*., lauryl trimethyl ammonium chloride and alkyl benzyl dimethylammonium chloride); or polyoxyethylenealkylamines.

Exemplary nonionic surfactants include, but are not limited to, polyethers (*e.g*., ethylene oxide and propylene oxide condensates, which include straight and branched chain alkyl and alkaryl polyethylene glycol and polypropylene glycol ethers and thioethers); alkylphenoxypoly(ethyleneoxy)ethanols having alkyl groups containing from 7 to 18 carbon atoms and having from 4 to 240 ethyleneoxy units (*e.g*., heptylphenoxypoly(ethyleneoxy) ethanols, and nonylphenoxypoly(ethyleneoxy) ethanols); polyoxyalkylene derivatives of hexitol including sorbitans, sorbides, mannitans, and mannides; partial long-chain fatty acids esters (*e.g*., polyoxyalkylene derivatives of sorbitan monolaurate, sorbitan monopalmitate, sorbitan monostearate, sorbitan tristearate, sorbitan monooleate, and sorbitan trioleate); condensates of ethylene oxide with a hydrophobic base, the base being formed by condensing propylene oxide with propylene glycol; sulfur containing condensates (*e.g*., those condensates prepared by condensing ethylene oxide with higher alkyl mercaptans, such as nonyl, dodecyl, or tetradecyl mercaptan, or with alkylthiophenols where the alkyl group contains from about 6 to about 15 carbon atoms); ethylene oxide derivatives of long-chain carboxylic acids (*e.g*., lauric, myristic, palmitic, and oleic acids, such as tall oil fatty acids); ethylene oxide derivatives of long-chain alcohols (*e.g.,* octyl, decyl, lauryl, or cetyl alcohols); or ethylene oxide/propylene oxide copolymers.

In embodiments of the present disclosure comprising a process aid, wherein the process aid is a surfactant, the surfactant may comprise one or more of Dynol^{™} 607, which is a 2,5,8,11-tetramethyl-6-dodecyne-5,8-diol ethoxylate commercially available from Evonik Corporation (Allentown, PA), SURFYNOL^{®} 420, SURFYNOL^{®} 440, or SURFYNOL^{®} 465, which are ethoxylated 2,4,7,9-tetramethyl-5-decyn-4,7-diol surfactants commercially available from Evonik Corporation, Stanfax, which is a sodium lauryl sulfate commercially available from Tiarco LLC (Dalton, GA), Triton^{™} GR-PG70, which is a sodium sulfosuccinate commercially available from The Dow Chemical Company (Midland, Michigan), and Triton^{™} CF-10, which is a poly(oxy-1,2-ethanediyl), alpha-(phenylmethyl)-omega-(1,1,3,3-tetramethylbutyl)phenoxy surfactant commercially available from The Dow Chemical Company. Further exemplary surfactants include alkyl polyglucosides (*e.g*., Glucopon^{®} 425N, commercially available from BASF Corporation), and alcohol ethoxylates (*e.g*., Lutensol^{®} LA 60, commercially available from BASF Corporation).

In some embodiments, the aqueous binder composition may optionally include at least one coupling agent. The coupling agent may comprise a silane coupling agent. Non-limiting examples of silane coupling agents may be characterized by the functional groups alkyl, aryl, amino, epoxy, vinyl, methacryloxy, ureido, isocyanato, and mercapto. The silane coupling agent may include silanes containing one or more nitrogen atoms that have one or more functional groups such as amine (primary, secondary, tertiary, and quaternary), amino, imino, amido, imido, ureido, or isocyanato. Examples of suitable silane coupling agents include, but are not limited to, aminosilanes (e.g., triethoxyaminopropylsilane; 3-aminopropyltriethoxysilane and 3-aminopropyl-trihydroxysilane), epoxy trialkoxysilanes (*e.g*., 3-glycidoxypropyltrimethoxysilane and 3-glycidoxypropyltriethoxysilane), methyacryl trialkoxysilanes (*e.g.,* 3-methacryloxypropyltrimethoxysilane and 3-methacryloxypropyltriethoxysilane), hydrocarbon trialkoxysilanes, amino trihydroxysilanes, epoxy trihydroxysilanes, methacryl trihydroxy silanes, or hydrocarbon trihydroxysilanes. The silane coupling agent may comprise an aminosilane, such as γ-aminopropyltriethoxysilane.

In embodiments of the present disclosure comprising a coupling agent, the aqueous binder composition may comprise from 0.01 to 5 wt.% of the coupling agent, based on the total solids content of the aqueous binder composition, including from 0.05 to 0.4 wt.%, including from 0.1 to 0.35 wt.%, including from 0.15 to 0.3 wt.%. In some embodiments, the coupling agent may be included in an increased concentration, such that the aqueous binder composition may comprise from 0.5 to 5 wt.% of the coupling agent, based on the total solids content of the aqueous binder composition, including from 0.7 to 2.5 wt.%, including 0.85 to 2 wt.%, including from 0.95 to 1.5 wt.%, including up to 1 wt.%.

In embodiments of the present disclosure, the one or more process aids and/or the one or more coupling agents may be added to the fibers or the processing line separate from the binder composition. For example, in some embodiments, the process aids and/or coupling agents may be sprayed onto the fibers before or after application of the binder composition.

In some embodiments, the aqueous binder composition may optionally include a dust suppressing agent to reduce or eliminate the presence of inorganic or organic particles which may have adverse impact in the subsequent fabrication and installation of the insulation materials. The dust suppressing agent may be any conventional mineral oil, mineral oil emulsion, natural or synthetic oil, bio-based oil, or lubricant, including, but not limited to, silicone and silicone emulsions, polyethylene glycol, or any petroleum or non-petroleum oil with a high flash point to minimize the evaporation of the oil inside the oven.

In embodiments of the present disclosure comprising a dust suppressing agent, the aqueous binder composition may comprise up to 15 wt.% of the dust suppressing agent, based on the total solids content of the aqueous binder composition, including up to 12 wt.%, including up to 5 wt.%, including from 0.1 to 15 wt.%, including from 0.5 to 12 wt.%, including from 1 to 10 wt.%, including from 1 to 7 wt.%.

The pH of the binder composition in an un-cured state may be adjusted depending on the intended application, to facilitate the compatibility of the ingredients of the binder composition, or to function with various types of fibers (*e.g.*, glass fibers versus mineral wool fibers). Specifically, mineral wool fibers are highly alkaline, with a higher concentration of bi- and tri-valent metal oxides in the fibers than other inorganic fibers, such as fiberglass. It has been found that utilizing a formaldehyde-free binder composition formulated for glass fibers cannot be directly substituted for use with mineral wool fibers, as the acid groups in traditional fiberglass binder compositions irreversibly react with the metal oxides of the mineral wool fibers upon application, which blocks the acid groups from being available for an esterification reaction with the polyhydroxy crosslinking agents. Thus, if the pH of the binder composition is significantly lower than the pH of the fiber, the pre-reaction between the binder composition and fiber can change the composition and impact the amount of ester bonds present upon curing, which will result in a weaker end product upon cure. As such, products formed from acidic binders tend to lack the strength of phenol formaldehyde binders when used with mineral wool fibers.

In accordance with the present disclosure, when intended for use with glass fibers, the aqueous binder composition in an uncured state has a pH of from 2 to 5, including from 2.2 to 4, including from 2.5 to 3.8, including from 2.6 to 3.5. After cure, when intended for use with glass fibers, the pH of the aqueous binder composition may be at least 5, including from 6.5 to 8.8, including from 6.8 to 8.2.

Alternatively, when intended for use with mineral wool fibers, the aqueous binder composition in an uncured state has a pH of at least 4, including from 4 to 7, including from 4.2 to 6.8, including from 4.5 to 6.5. After cure, when intended for use with mineral wool fibers, the pH of the aqueous binder composition may be at least 6.5, including from 6.5 to 8.5, including from 7.2 to 7.8.

In some embodiments, the aqueous binder composition may optionally include a pH adjuster, in an amount sufficient to adjust the pH of the binder composition to a desired level. In some embodiments, a pH adjuster is utilized to adjust the pH of the binder composition to an acidic pH. Examples of suitable acidic pH adjusters include inorganic acids including, but not limited to, sulfuric acid, phosphoric acid and boric acid. Examples of suitable acidic pH adjusters include organic acids including, but not limited to, p-toluenesulfonic acid, acetic acid and anhydrides thereof, adipic acid, oxalic acid, or their corresponding salts. Examples of suitable acidic pH adjusters include acid precursors. In some embodiments, a pH adjuster is utilized to raise the pH of the binder composition. Examples of suitable alkaline pH adjusters include organic or inorganic bases. The bases may be volatile or non-volatile bases. Exemplary volatile bases include, but are not limited to, ammonia and alkyl-substituted amines, such as methyl amine, ethyl amine or 1-aminopropane, dimethyl amine, or ethyl methyl amine. Exemplary non-volatile bases include, but are not limited to, sodium hydroxide, potassium hydroxide, sodium carbonate, or t-butylammonium hydroxide.

In accordance with the present disclosure, the polymeric polycarboxylic acid may be pre-neutralized with a neutralization agent. Exemplary neutralization agents may include, but are not limited to, organic and inorganic bases, including sodium hydroxide and ammonium hydroxide, as well as primary, secondary, or tertiary amines, including alkanol amine and diethylamine. In embodiments of the present disclosure, the neutralization agents may comprise at least one of sodium hydroxide and triethanolamine.

In accordance with the present disclosure, optionally all or a percentage of the acid functionality in the polymeric polycarboxylic acid may be temporarily blocked with the use of a protective agent, which temporarily blocks the acid functionality from complexing with the mineral wool fibers, and is subsequently removed by heating the binder composition to a temperature of at least 150 °C, freeing the acid functionalities to crosslink with the polyol component and complete the esterification process, during the curing process. In some embodiments, from 10 to 100% of the carboxylic acid functional groups in the polymeric polycarboxylic acid may be temporarily blocked by the protective agent, including from 25 to 99%, including from 30 to 90%, and including from 40 to 85%. In some embodiments, at least 40% of the acid functional groups in the polymeric polycarboxylic acid may be temporarily blocked by the protective agent. The protective agent may be capable of reversibly bonding to the carboxylic acid groups of the polymeric polycarboxylic acid.

In some embodiments, the protective agent comprises any compound comprising molecules capable of forming at least one reversible ionic bond with a single acid functional group. In some embodiments, the protective agent may comprise a nitrogen-based protective agent, such as an ammonium-based protective agent; an amine-based protective agent; or mixtures thereof. An exemplary ammonium based protective agent includes ammonium hydroxide. Exemplary amine-based protective agents include alkylamines and diamines, such as, for example ethyleneimine, ethylenediamine, hexamethylenediamine; alkanolamines, such as ethanolamine, diethanolamine, triethanolamine; ethylenediamine-N,N'-disuccinic acid (EDDS); ethylenediaminetetraacetic acid (EDTA); or mixtures thereof. In addition, it has been surprisingly discovered that the alkanolamine may be used as both a protecting agent and as a participant in the crosslinking reaction to form ester in the cured binder. Thus, the alkanolamine may have a dual-functionality of protective agent and polyol for crosslinking with the polymeric polycarboxylic acid via esterification.

Contrary to a pH adjuster, the protective agent, as defined herein, only temporarily and reversibly blocks the acid functional groups in the polymeric polycarboxylic acid component. In contrast, pH adjusters, such as sodium hydroxide, permanently terminate an acid functional group, which prevents crosslinking between the acid and hydroxyl groups due to the blocked acid functional groups. Thus, the inclusion of traditional pH adjusters, such as sodium hydroxide, may not provide the desired effect of temporarily blocking the acid functional groups, while later freeing up those functional groups during to cure to permit crosslinking via esterification. Accordingly, some embodiments disclosed herein, the binder composition may be devoid of pH adjusters, including, for example, sodium hydroxide and potassium hydroxide.

In embodiments of the present disclosure comprising a protective agent, the aqueous binder composition may comprise up to 50 wt.% of the protective agent, based on the total solids content of the aqueous binder composition, including at least 3.5 wt.%, including at least 4 wt.%, including at least 5 wt.%, including at least 5.5 wt.%, including at least 6 wt.%, including from 1.5 to 25 wt.%, including from 5 to 20 wt.%, including from 10 to 25 wt.%.

In some embodiments, the aqueous binder composition may optionally include one or more of an extender, a cross-linking density enhancer, a deodorant, an antioxidant, a biocide, a moisture resistant agent, or combinations thereof. Optionally, the aqueous binder composition may comprise one or more of dyes, pigments, additional fillers, colorants, UV stabilizers, thermal stabilizers, anti-foaming agents, emulsifiers, preservatives (*e.g*., sodium benzoate), corrosion inhibitors, or mixtures thereof. Other optional ingredients include lubricants, wetting agents, antistatic agents, or water repellent agents. Such ingredients may optionally be included in the binder composition in trace amounts (*e.g*., less than 0.1 wt.%) up to 10 wt.%, based on the total solids content of the aqueous binder composition.

In accordance with the present disclosure, the aqueous binder composition comprises water to dissolve or disperse the active solids for application onto the reinforcement fibers. Water may be added in an amount sufficient to dilute the aqueous binder composition to a viscosity that is suitable for its application to the reinforcement fibers, and to achieve a desired solids content on the fibers.

The aqueous binder compositions disclosed herein comprise from 15 to 70 wt.% of a polymeric polycarboxylic acid, from 1 to 30 wt.% of a monomeric polycarboxylic acid, and from 5 to 55 wt.% of a monomeric polyol having at least three hydroxyl groups, wherein each wt.% is based on the total solids content of the aqueous binder composition, wherein the weight ratio of the polymeric polycarboxylic acid to the monomeric polycarboxylic acid is from 0.5:1 to 14:1, and wherein with respect to the polymeric polycarboxylic acid, the monomeric polycarboxylic acid, and the monomeric polyol, the ratio of molar equivalents of hydroxyl groups to carboxylic acid groups is from 0.5:1 to 2.5:1. Exemplary non-limiting aqueous binder compositions are set forth below in Table 1. Additionally, the aqueous binder compositions disclosed herein may include further components, as set forth in Table 2.

**Table 1**

| **Component** | **Exemplary Range 1 (% By Weight of Total Solids)** | **Exemplary Range 2 (% By Weight of Total Solids) ^{‡}** | **Exemplary Range 3 (% By Weight of Total Solids) ^{‡}** |
|---|---|---|---|
| Polymeric polycarboxylic acid | From 15 to 70 wt.% | From 20 to 40 wt.% | From 25 to 35 wt.% |
| Monomeric polycarboxylic acid | From 1 to 35 wt.% | From 1 to 30 wt.% | From 10 to 28 wt.% |
| Polyol | From 5 to 55 wt.% | From 25 to 50 wt.% | From 35 to 45 wt.% |
| Weight ratio of polymeric polycarboxylic acid to monomeric polycarboxylic acid | From 0.5:1 to 14:1 | From 0.5:1 to 5:1 | From 0.9:1 to 2:1 |
| Ratio of molar equivalents of hydroxyl groups to carboxylic acid groups | From 0.5:1 to 2.5:1 | From 0.5:1 to 2.2:1 | From 0.5:1 to 2:1 |

| | | | |
|---|---|---|---|
| ^{‡} According to the invention. | | | |

**Table 2**

| **Component** | **Exemplary Range 1 (% By Weight of Total Solids)** | **Exemplary Range 2 (% By Weight of Total Solids) ^{‡}** | **Exemplary Range 3 (% By Weight of Total Solids) ^{‡}** |
|---|---|---|---|
| Polymeric polycarboxylic acid | From 15 to 70 wt.% | From 20 to 40 wt.% | From 25 to 35 wt.% |
| Monomeric polycarboxylic acid | From 1 to 35 wt.% | From 1 to 30 wt.% | From 10 to 28 wt.% |
| Polyol | From 5 to 55 wt.% | From 25 to 50 wt.% | From 35 to 45 wt.% |
| Catalyst | From 0.1 to 5 wt.% | From 0.2 to 4 wt.% | From 0.2 to 3.5 wt.% |
| Coupling agent | From 0.5 to 5 wt.% | From 0.7 to 2.5 wt.% | From 0.85 to 2 wt.% |
| Dust Suppressing Agent | From 0.1 to 15 wt.% | From 0.5 to 12 wt.% | From 1 to 7 wt.% |
| Surfactant | From 0.1 to 5 wt.% | From 0.1 to 4 wt.% | From 0.1 to 3.5 wt.% |
| Optional Protective Agent* | From 1.5 to 25 wt.% | From 5 to 20 wt.% | From 10 to 15 wt.% |
| Weight ratio of polymeric polycarboxylic acid to monomeric polycarboxylic acid | From 0.5:1 to 14:1 | From 0.5:1 to 5:1 | From 0.9:1 to 2:1 |
| Ratio of molar equivalents of hydroxyl groups to carboxylic acid groups | From 0.5:1 to 2.5:1 | From 0.5:1 to 2.2:1 | From 0.5:1 to 2:1 |

| | | | |
|---|---|---|---|
| *In embodiments of the present disclosure comprising binder compositions for use with mineral wool fibers, optionally all or a percentage of the acid functionality in the polymeric polycarboxylic acid may be temporarily blocked with the use of a protective agent. ^{‡} According to the invention. | | | |

In accordance with the inventive features disclosed herein, the aqueous binder composition may comprise a higher solids content than conventional binder compositions. In some embodiments, the aqueous binder composition comprises greater than 50% binder solids, including from 50 to 80%, including from 55 to 75%, including from 60 to 75%, including from 65 to 70% binder solids. In other embodiments, the aqueous binder composition comprises greater than 10% binder solids, including greater than 20%, greater than 30%, and greater than 40% binder solids.

In accordance with the inventive features disclosed herein, despite the fact that the aqueous binder compositions comprise a higher solids content than conventional binder compositions, the viscosity of the aqueous binder compositions is surprisingly lower than conventional binder compositions. In accordance with the present disclosure, the aqueous binder composition has a viscosity (at a temperature of 25 °C) of less than 15,000 centipoise (cP) at 75% binder solids (1 cP = 1mPa.s). Further exemplary viscosities of binder compositions in accordance with the present disclosure are provided in Table 3 below.

**Table 3**

| **% Binder Solids** | **Viscosity (cP) at 25°C** |
|---|---|
| 10% | Less than 10 |
| 20% | Less than 15 |
| 30% | Less than 35 |
| 40% | Less than 100 |
| 50% | Less than 1,000 |
| 75% | Less than 15,000 |

In accordance with the present disclosure, the amount of binder composition present in a product may be determined by measuring loss on ignition (LOI). In some embodiments, the LOI is from 1 to 20%, including from 5.5 to 17%, including from 8 to 15%, including from 10 to 14.5%. The particular LOI is largely dependent on the type of product being produced.

In accordance with the present disclosure, the aqueous binder composition is formulated to have a reduced level of water-soluble material post-cure, as determined by extracting water-soluble materials with deionized water for 2 hours at room temperature using 1000 g of deionized water per about 1 gram of binder. The higher the level of water-soluble material after cure, the more likely it is that a cured material suffers from leaching when exposed to water or a hot/humid environment. In some embodiments, the aqueous binder composition has no greater than 6% by weight of water-soluble material after cure. In some embodiments, the aqueous binder composition has less than 5.5% by weight water-soluble material after cure, including less than 5% by weight, less than 4%, less than 3%, less than 2.5%, less than 2%, less than 1.5%, or less than 1% by weight. In some embodiments, the aqueous binder composition has from 2 to 3% by weight of water-soluble material after cure. It has been found that reducing the level of water-soluble material after cure to no greater than 6% by weight will improve the tensile strength of the binder composition, as compared to an otherwise similar binder composition having greater than 6% by weight water-soluble material after cure.

In accordance with the present disclosure, the aqueous binder composition may be used to manufacture fibrous insulation products, such as fiberglass or mineral wool insulation products. Thus, the present disclosure is also directed to a method for producing an insulation product, including the step of contacting fibers with a binder composition as disclosed herein.

The term "fibrous insulation product" as used herein is general, and encompasses a variety of compositions, articles of manufacture, and manufacturing processes. The fibrous insulation products of the present disclosure comprise a plurality of randomly oriented fibers. In some embodiments, the plurality of randomly oriented fibers are inorganic fibers, including, but not limited to glass fibers, glass wool fibers, mineral wool fibers, rock wool fibers, slag wool fibers, stone wool fibers, ceramic fibers, metal fibers, or combinations thereof. Optionally, the fibers may include natural fibers or synthetic fibers such as carbon, polyester, polyethylene, polyethylene terephthalate, polypropylene, polyamide, aramid, or polyaramid fibers. The term "natural fiber" as used herein refers to plant fibers extracted from any part of a plant, including, but not limited to, the stem, seeds, leaves, roots, or phloem. Examples of natural fibers include wood fibers, cellulosic fibers, straw, wood chips, wood strands, cotton, jute, bamboo, ramie, bagasse, hemp, coir, linen, kenaf, sisal, flax, henequen, and combinations thereof. The fibrous insulation products may be formed entirely of one type of fiber, or they may be formed of a combination of types of fibers. For example, the fibrous insulation products may be formed of combinations of various types of glass fibers or various combinations of different inorganic fibers or natural fibers depending on the desired application. In some embodiments, the insulation products are formed entirely of glass fibers. In other embodiments, the insulation products are formed entirely of mineral wool fibers.

"Product properties" or "mechanical properties" refers to a variety of testable physical properties that fibrous insulation products possess.

For example, fibrous insulation products may be characterized by the density of the product. Low or light density insulation batts and blankets typically have densities between 0.2 and 5 pounds per cubic foot ("pcf") (1 pcf = 16 kg/m³), more commonly from 0.3 to 4 pcf, with binder application rates of 2 to 13% LOI. Such exemplary products include, *e.g*., residential insulation batts. Fibrous insulation products can be provided in other forms including board (a heated and compressed batt) and molding media (an alternative form of heated and compressed batt) for use in different applications. Fibrous insulation products also include higher density products having densities from about 10 to about 20 pcf (with LOI in excess of 12%), or medium density products having densities from 1 pcf to 10 pcf (with LOI of 5 to 15%) such as boards and panels. Medium and higher density insulation products may be used in industrial or commercial applications, including, e.g., metal building insulation, pipe or tank insulation, insulative ceiling and wall panels, duct boards and HVAC insulation, appliance and automotive insulation, etc. Further fibrous products include non-woven fiber mats and particle boards, and composite products manufactured therefrom.

Fibrous insulation products may also be characterized by at least the following common properties. "Recovery," which is the ability of the batt or blanket to resume its original or designed thickness following release from compression during packaging or storage, is tested by measuring the post-compression height of a product of known or intended nominal thickness, or by other suitable means. "Stiffness" or "sag," which refers to the ability of a batt or blanket to remain rigid and hold its linear shape, is measured by draping a fixed length section over a fulcrum and measuring the angular extent of bending deflection, or sag. Lower values indicate a stiffer and more desirable product property. "Tensile strength," which refers to the force that is required to tear the fibrous product in two, is typically measured in both the machine direction (MD or X-axis) and in the cross-machine direction ("CD" or "XMD" or Y-axis), and occasionally in a depth or Z-axis direction as well. "Compressive strength," which refers to the force that is required compress the fibrous insulation product, may be measured as the force required to compress the batt (or package) a predetermined distance, or as the distance compressed by a predetermined force. Compressive strength may be measured in any of three directions as with tensile strength, but CD is most typical.

Mechanical properties of a fibrous insulation product may be tested relatively soon after manufacture - a time referred to herein as "initial" or "end of line." Over time, the mechanical properties may degrade, at which point a more relevant test is one that measures "aged" mechanical properties. Aging may be natural, *i.e*., real-time aging over the course of several months or years. More typically, though, "aging" is simulated by proxy, *e.g*., via accelerated aging conditions, as in the case of hot and humid test conditions. While either type of aging produces "aged" properties that can be measured, the accelerated versions are reasonable proxies that can be tested in a matter of days rather than months.

The fibrous insulation products produced in accordance with the present inventive concepts demonstrate improved properties compared to a fibrous insulation product formed with an otherwise identical binder composition that does not include the claimed weight ratio of polymeric polycarboxylic acid to monomeric polycarboxylic acid at a particular monomeric polyol concentration.

An exemplary binder composition was prepared for use in an insulation product containing mineral wool fibers. In accordance with the present invention set forth herein, the binder composition comprised a polymeric carboxylic acid (*i.e.,* polyacrylic acid), a monomeric carboxylic acid (*i.e.,* citric acid), and a monomeric polyol (*i.e.,* sorbitol), as detailed in Table 4 below. The uncured binder had a pH of 5.

**Table 4**

| **Ingredient** | Ratio | Conc. (%) | Wt.% Based on Total Solids | Weight Formulation (Kg) |
|---|---|---|---|---|
| Polyacrylic Acid (Coatex XP3270) | 30.00 | 50.1 | 25.88 | 5.17 |
| Citric Acid | 30.00 | 100 | 25.88 | 2.59 |
| Sodium Hypophosphite | 0.60 | 100 | 0.52 | 0.05 |
| Ammonium Hydroxide | | 29 | 0.00 | 3.02 |
| Sorbitol | 40.00 | 70 | 34.51 | 4.93 |
| Surfynol 465 | 0.25 | 100 | 0.22 | 0.02 |
| Dedusting Oil | 8.00 | 50 | 8.00 | 1.60 |
| Amino Silane | 1.00 | 60 | 1.00 | 0.17 |
| Silicone (MEM 1581) | 4.00 | 40 | 4.00 | 1.00 |
| Water | | | | *q.s.* |
| **Total (Kg)** | | | 100.00 | 100.00 |

The following paragraphs provide further non-limiting exemplary embodiments.

A fibrous insulation product may comprise: a plurality of randomly oriented fibers; and an aqueous binder composition at least partially coating the fibers, the aqueous binder composition comprising: from 20 to 40 wt.% of a polymeric polycarboxylic acid; from 5 to 30 wt.% a monomeric polycarboxylic acid; and from 25 to 50 wt.% of a monomeric polyol having at least three hydroxyl groups, wherein each wt.% is based on the total solids content of the aqueous binder composition, and wherein the weight ratio of the polymeric polycarboxylic acid to the monomeric polycarboxylic acid is from 0.5:1 to 5:1.

The ratio of molar equivalents of hydroxyl groups to carboxylic acid groups may be from 0.5:1 to 2.5:1 in the fibrous insulation product.

The polymeric polycarboxylic acid may comprise polyacrylic acid; the monomeric polycarboxylic acid may comprise citric acid; and the monomeric polyol may comprise sorbitol in the fibrous insulation product.

The present invention has been described above both generally and with regard to various specific exemplary embodiments. Although the present invention has been set forth in what are believed to be exemplary illustrative embodiments, a wide variety of alternatives will be apparent to those of skill in the art from reading this disclosure. The present invention is not otherwise limited, except for those instances when presented in specific claims.

### EXAMPLES

The following examples are included for the purposes of illustration, and do not limit the scope of the present invention described herein.

### Example 1

Six binder compositions were prepared in accordance with the inventive concepts set forth herein. In accordance with the instant disclosure, the binder compositions comprised a polymeric carboxylic acid (*i.e.,* polyacrylic acid), a monomeric carboxylic acid (*i.e.,* citric acid), and a monomeric polyol (*i.e.,* sorbitol). Each binder composition was formulated with varying concentrations of the foregoing ingredients as set forth in Table 5 below. All other secondary ingredients in each of the six binder formulations were identical. Comparative Samples 1 and 2 fall outside the scope of the instant disclosure, whereas Samples 3 through 6 comprise binder formulations in accordance with the present disclosure set forth herein.

**Table 5**

| **Sample/Properties** | **Comp. 1** | **Comp. 2** | **3** | **4^{‡}** | **5^{‡}** | **6^{‡}** |
|---|---|---|---|---|---|---|
| Weight % of Polyacrylic Acid/Citric Acid/Sorbitol (PA/C/S) in Uncured Binder | 0/42/58 | 12/31/57 | 40/5/55 | 45/30/25 | 55/5/40 | 70/5/25 |
| Weight Ratio of Polyacrylic Acid:Citric Acid (PA:CA) | 0 | 0.39:1 | 8:1 | 1.5:1 | 11:1 | 14:1 |
| Ratio of molar equivalents of hydroxyl groups to carboxylic acid groups (OH:COOH) | 4.16:1 | 3.14:1 | 1.97:1 | 0.63:1 | 1.06:1 | 0.53:1 |

| | | | | | | |
|---|---|---|---|---|---|---|
| ^{‡} According to the invention. | | | | | | |

Each of the six binder compositions were utilized to form fiberglass hand sheet specimens. The fiberglass hand sheets were cured for 4 minutes at 425° F (218 °C), and cut into 6-inch by 1-inch rectangular samples having a thickness of 0.03 inches (1 inch = 2.5 cm). The tensile strength, modulus, Loss on Ignition (LOI), tensile strength divided by the LOI (tensile strength/LOI), and modulus/LOI for each sample was determined under ambient conditions and immersion conditions. The tensile strength and modulus were measured using a 3343 Single Column Instron with a pulling speed of 2 inches per minute. The LOI of the reinforcing fibers is the reduction in weight experienced by the fibers after heating them to a temperature sufficient to burn or pyrolyze the binder composition from the fibers. The LOI was measured according to the procedure set forth in TAPPI T-1013 OM06, Loss on Ignition of Fiberglass Mats (2006). For the immersion test, the six samples were placed in a water bath of DI water set to 80 °C for a specified time period (*e.g.,* 0 minutes, 10 minutes, and 20 minutes). The samples were tested immediately upon removal from the bath, and lightly patted with a paper towel to remove excess water.

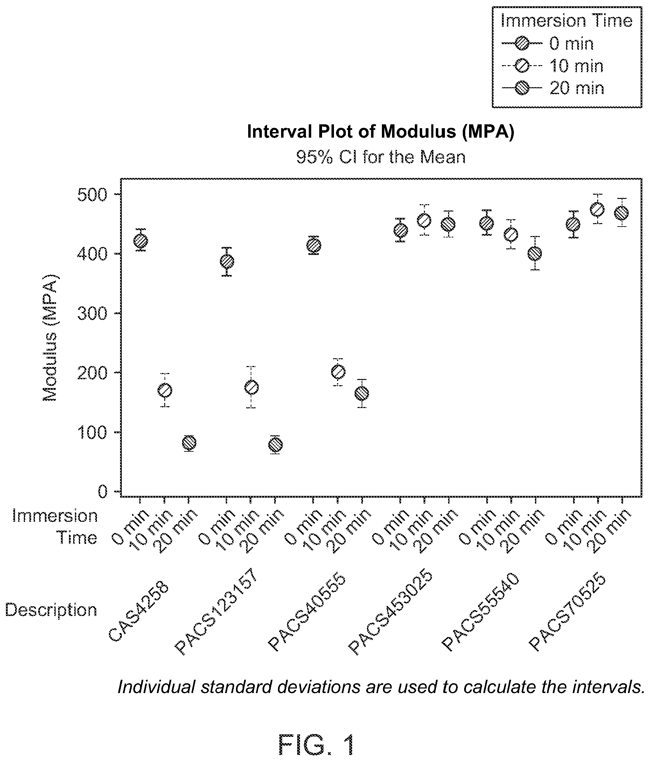

The results provided in Figure 1 exemplify the improved product performance imparted by the inventive binder compositions. Specifically, as illustrated in Figure 1, comparative Samples 1 and 2, which have a weight ratio of polyacrylic acid:citric acid outside the inventive concepts set forth herein, show markedly lower elastic modulus performance after 20 minutes immersion than Samples 3 through 6. Further, within Sample 3 and the inventive Samples 4 through 6, both a relatively lower concentration of sorbitol and a relatively lower ratio of molar equivalents of hydroxyl groups to carboxylic acid groups provide improved elastic modulus performance after 10 minutes and after 20 minutes immersion.

### Example 2

Eight binder compositions were prepared in accordance with the present disclosure set forth herein. The binder compositions comprised a polymeric carboxylic acid (*i.e*., polyacrylic acid), a monomeric carboxylic acid (*i.e.,* citric acid), and a monomeric polyol (*i.e*., sorbitol). Each binder composition was formulated with varying concentrations of the foregoing ingredients as set forth in Table 6 below. All other secondary ingredients in each of the eight binder formulations were identical. Comparative Samples 1-3 include weight ratios of polyacrylic acid:citric acid that fall outside the scope of the instant inventive features. Comparative Sample 5 was prepared with a weight ratio of polyacrylic acid: citric acid that falls within the scope of the instant disclosure; however, the amount of sorbitol in Sample 5 was adjusted to be outside the scope of the inventive binder composition. Accordingly, each of Comparative Samples 1-3 and 5 have a ratio of molar equivalents of hydroxyl groups to carboxylic acid groups (OH:COOH) outside the scope of the instant disclosure.

Samples 4 and 6-8 comprise binder formulations in accordance with the present invention set forth herein.

**Table 6**

| **Sample/ Properties** | **Comp. 1** | **Comp. 2** | **Comp. 3** | **4** | **Comp. 5** | **6** | **7** | **8** |
|---|---|---|---|---|---|---|---|---|
| Weight % of Polyacrylic Acid/Citric Acid/Sorbitol (PA/C/S) in Uncured Binder | 0/42/58 | 10/30/60 | 12/31/57 | 20/30/50 | 30/10/60 | 30/30/40 | 40/10/50 | 50/10/40 |
| Weight Ratio of Polyacrylic Acid: Citric Acid (PA:CA) | 0 | 0.33:1 | 0.39:1 | 0.66:1 | 3:1 | 1:1 | 4:1 | 5:1 |
| Ratio of molar equivalents of hydroxyl groups to carboxylic acid groups (OH:COOH) | 4.16:1 | 3.63:1 | 3.14:1 | 2.17:1 | 2.61:1 | 1.35:1 | 1.69:1 | 1.11:1 |

Each of the eight binder compositions were utilized to form nonwoven fiberglass binder impregnated filter (BIF) specimens. The nonwoven fiberglass BIF sheet samples had a width of 9.5 mm, a thickness of 0.5 mm, and a length of 97 mm, and were cured for 4 minutes at 425° F (218 °C). Each sample was weighed prior to cure and immediately after cure to determine the LOI. Thereafter, each sample was immersed in water for 24 hours to determine the water solubility of the binder.

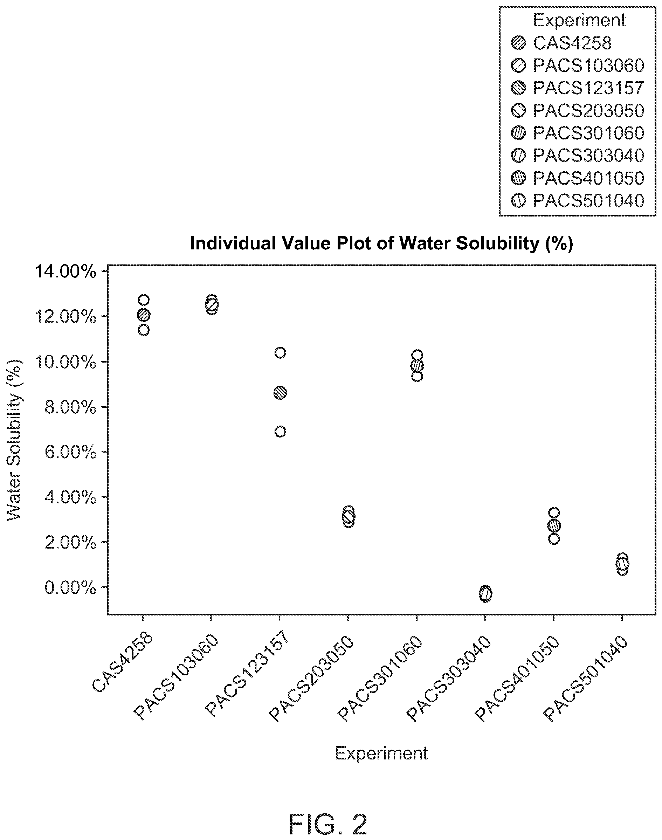

The results provided in Figure 2 exemplifies the improved product performance imparted by the inventive binder compositions. Specifically, the higher the level of water-soluble material after cure, the more likely it is that a cured material suffers from leaching when exposed to water or a hot/humid environment. As illustrated in Figure 2, comparative Samples 1-3 and 5, which fall outside the scope of the present invention described herein, show significantly higher levels of water-soluble material than Samples 4 and 6-8.

## Claims

1. An aqueous binder composition comprising:
from 15 to 70 wt.% of a polymeric polycarboxylic acid;
from 1 to 30 wt.% of a monomeric polycarboxylic acid; and
from 25 to 50 wt.% of a monomeric polyol having at least three hydroxyl groups,
wherein each wt.% is based on the total solids content of the aqueous binder composition, and
wherein the weight ratio of the polymeric polycarboxylic acid to the monomeric polycarboxylic acid is from 0.5:1 to 14:1.

2. The aqueous binder composition of claim 1, wherein the ratio of molar equivalents of hydroxyl groups to carboxylic acid groups is from 0.5:1 to 2.5:1.

3. The aqueous binder composition of claim 1 or claim 2, wherein the ratio of molar equivalents of hydroxyl groups to carboxylic acid groups is from 0.5:1 to 2.2:1.

4. The aqueous binder composition of any one of claims 1 to 3, wherein the weight ratio of the polymeric polycarboxylic acid to the monomeric polycarboxylic acid is from 0.5:1 to 5:1.

5. The aqueous binder composition of any one of claims 1 to 4, wherein the weight ratio of the polymeric polycarboxylic acid to the monomeric polycarboxylic acid is from 0.9:1 to 2:1.

6. The aqueous binder composition of any one of claims 1 to 5, wherein the polymeric polycarboxylic acid comprises polyacrylic acid.

7. The aqueous binder composition of any one of claims 1 to 6, wherein the monomeric polycarboxylic acid comprises citric acid.

8. The aqueous binder composition of any one of claims 1 to 7, wherein the monomeric polyol comprises sorbitol.

9. The aqueous binder composition of any one of claims 1 to 8, wherein:
the polymeric polycarboxylic acid comprises polyacrylic acid;
the monomeric polycarboxylic acid comprises citric acid; and
the monomeric polyol comprises sorbitol.

10. The aqueous binder composition of any one of claims 1 to 9, wherein the aqueous binder composition is devoid of polyvinyl alcohol.

11. The aqueous binder composition of any one of claims 1 to 10, wherein the aqueous binder composition further comprises a nitrogen-based protective agent, wherein the nitrogen-based protective agent comprises at least one of an ammonium-based protective agent or an amine-based protective agent.

12. The aqueous composition of claim 1, wherein the aqueous composition comprises:
from 20 to 40 wt.% of the polymeric polycarboxylic acid;
from 1 to 30 wt.% of the monomeric polycarboxylic acid; and
from 25 to 50 wt.% of the monomeric polyol having at least three hydroxyl groups,
wherein each wt.% is based on the total solids content of the aqueous binder composition,
wherein the weight ratio of the polymeric polycarboxylic acid to the monomeric polycarboxylic acid is from 0.5:1 to 5:1, and
wherein the ratio of molar equivalents of hydroxyl groups to carboxylic acid groups is from 0.5:1 to 2.2:1.

13. The aqueous composition of claim 12, wherein the aqueous composition consists of:
from 20 to 40 wt.% of the polymeric polycarboxylic acid;
from 1 to 30 wt.% of the monomeric polycarboxylic acid; and
from 25 to 50 wt.% of the monomeric polyol having at least three hydroxyl groups,
wherein each wt.% is based on the total solids content of the aqueous binder composition,
wherein the weight ratio of the polymeric polycarboxylic acid to the monomeric polycarboxylic acid is from 0.5:1 to 5:1, and
wherein the ratio of molar equivalents of hydroxyl groups to carboxylic acid groups is from 0.5:1 to 2.2:1.

14. The aqueous composition of claim 1, wherein the aqueous composition comprises:
from 25 to 35 wt.% of the polymeric polycarboxylic acid;
from 10 to 28 wt.% the monomeric polycarboxylic acid; and
from 35 to 45 wt.% of the monomeric polyol having at least three hydroxyl groups,
wherein each wt.% is based on the total solids content of the aqueous binder composition,
wherein the weight ratio of the polymeric polycarboxylic acid to the monomeric polycarboxylic acid is from 0.9:1 to 2:1, and
wherein the ratio of molar equivalents of hydroxyl groups to carboxylic acid groups is from 0.5:1 to 2: 1.

15. A fibrous insulation product comprising:
a plurality of randomly oriented fibers; and
the aqueous binder compositions of any one of claims 1 to 14 at least partially coating the fibers.

## Patentansprüche

1. Wässrige Bindemittelzusammensetzung umfassend:
von zu 15 bis 70 Gew.-% eine polymere Polycarbonsäure;
von zu 1 bis 30 Gew.-% eine monomere Polycarbonsäure; und
von zu 25 bis 50 Gew.-% ein monomeres Polyol, das mindestens drei Hydroxylgruppen aufweist,
wobei jedes Gew.-% auf dem Gesamtfeststoffgehalt der wässrigen Bindemittelzusammensetzung basiert, und
wobei das Gewichtsverhältnis der polymeren Polycarbonsäure zu der monomeren Polycarbonsäure von 0,5 : 1 bis 14 : 1 beträgt.

2. Wässrige Bindemittelzusammensetzung nach Anspruch 1, wobei das Verhältnis von Moläquivalenten von Hydroxylgruppen zu Carbonsäuregruppen von 0,5 : 1 bis 2,5 : 1 beträgt.

3. Wässrige Bindemittelzusammensetzung nach Anspruch 1 oder Anspruch 2, wobei das Verhältnis von Moläquivalenten von Hydroxylgruppen zu Carbonsäuregruppen von 0,5 : 1 bis 2,2 : 1 beträgt.

4. Wässrige Bindemittelzusammensetzung nach einem der Ansprüche 1 bis 3, wobei das Gewichtsverhältnis der polymeren Polycarbonsäure zu der monomeren Polycarbonsäure von 0,5 : 1 bis 5 : 1 beträgt.

5. Wässrige Bindemittelzusammensetzung nach einem der Ansprüche 1 bis 4, wobei das Gewichtsverhältnis der polymeren Polycarbonsäure zu der monomeren Polycarbonsäure von 0,9 : 1 bis 2 : 1 beträgt.

6. Wässrige Bindemittelzusammensetzung nach einem der Ansprüche 1 bis 5, wobei die polymere Polycarbonsäure Polyacrylsäure umfasst.

7. Wässrige Bindemittelzusammensetzung nach einem der Ansprüche 1 bis 6, wobei die monomere Polycarbonsäure Citronensäure umfasst.

8. Wässrige Bindemittelzusammensetzung nach einem der Ansprüche 1 bis 7, wobei das monomere Polyol Sorbitol umfasst.

9. Wässrige Bindemittelzusammensetzung nach einem der Ansprüche 1 bis 8, wobei:
die polymere Polycarbonsäure Polyacrylsäure umfasst;
die monomere Polycarbonsäure Citronensäure umfasst; und das monomere Polyol Sorbitol umfasst.

10. Wässrige Bindemittelzusammensetzung nach einem der Ansprüche 1 bis 9, wobei die wässrige Bindemittelzusammensetzung frei von Polyvinylalkohol ist.

11. Wässrige Bindemittelzusammensetzung nach einem der Ansprüche 1 bis 10, wobei die wässrige Bindemittelzusammensetzung ferner ein stickstoffbasiertes Schutzmittel umfasst, wobei das stickstoffbasierte Schutzmittel mindestens eines von einem ammoniumbasierten Schutzmittel oder einem aminbasierten Schutzmittel umfasst.

12. Wässrige Zusammensetzung nach Anspruch 1, wobei die wässrige Zusammensetzung umfasst:
von zu 20 bis 40 Gew.-% die polymere Polycarbonsäure;
von zu 1 bis 30 Gew.-% die monomere Polycarbonsäure; und
von zu 25 bis 50 Gew.-% das monomere Polyol, das mindestens drei Hydroxylgruppen aufweist,
wobei jedes Gew.-% auf dem Gesamtfeststoffgehalt der wässrigen Bindemittelzusammensetzung basiert,
wobei das Gewichtsverhältnis der polymeren Polycarbonsäure zu der monomeren Polycarbonsäure von 0,5 : 1 bis 5 : 1 beträgt, und
wobei das Verhältnis von Moläquivalenten von Hydroxylgruppen zu Carbonsäuregruppen 0,5 : 1 bis 2,2 : 1 beträgt.

13. Wässrige Zusammensetzung nach Anspruch 12, wobei die wässrige Zusammensetzung besteht aus:
von zu 20 bis 40 Gew.-% der polymeren Polycarbonsäure;
von zu 1 bis 30 Gew.-% der monomeren Polycarbonsäure; und
von zu 25 bis 50 Gew.-% dem monomeren Polyol, das mindestens drei Hydroxylgruppen aufweist,
wobei jedes Gew.-% auf dem Gesamtfeststoffgehalt der wässrigen Bindemittelzusammensetzung basiert,
wobei das Gewichtsverhältnis der polymeren Polycarbonsäure zu der monomeren Polycarbonsäure von 0,5 : 1 bis 5 : 1 beträgt, und
wobei das Verhältnis von Moläquivalenten von Hydroxylgruppen zu Carbonsäuregruppen 0,5 : 1 bis 2,2 : 1 beträgt.

14. Wässrige Zusammensetzung nach Anspruch 1, wobei die wässrige Zusammensetzung umfasst:
von zu 25 bis 35 Gew.-% die polymere Polycarbonsäure;
von zu 10 bis 28 Gew.-% die monomere Polycarbonsäure; und
von zu 35 bis 45 Gew.-% das monomere Polyol, das mindestens drei Hydroxylgruppen aufweist,
wobei jedes Gew.-% auf dem Gesamtfeststoffgehalt der wässrigen Bindemittelzusammensetzung basiert,
wobei das Gewichtsverhältnis der polymeren Polycarbonsäure zu der monomeren Polycarbonsäure von 0,9 : 1 bis 2 : 1 beträgt, und
wobei das Verhältnis von Moläquivalenten von Hydroxylgruppen zu Carbonsäuregruppen 0,5 : 1 bis 2 : 1 beträgt.

15. Faserisolierprodukt, umfassend:
eine Vielzahl von zufällig orientierten Fasern; und
die wässrigen Bindemittelzusammensetzungen nach einem der Ansprüche 1 bis 14, die mindestens teilweise die Fasern beschichten.

## Revendications

1. Composition aqueuse de liant comprenant :
de 15 à 70 % en poids d'un acide polycarboxylique polymère ;
de 1 à 30 % en poids d'un acide polycarboxylique monomère ; et
de 25 à 50 % en poids d'un polyol monomère ayant au moins trois groupes hydroxyle,
dans laquelle chaque % en poids est basé sur la teneur totale en solides de la composition aqueuse de liant, et
dans laquelle le rapport en poids de l'acide polycarboxylique polymère à l'acide polycarboxylique monomère va de 0,5:1 à 14:1.

2. Composition aqueuse de liant selon la revendication 1, dans laquelle le rapport des équivalents molaires des groupes hydroxyle aux groupes d'acide carboxylique va de 0,5:1 à 2,5:1.

3. Composition aqueuse de liant selon la revendication 1 ou la revendication 2, dans laquelle le rapport des équivalents molaires des groupes hydroxyle aux groupes d'acide carboxylique va de 0,5:1 à 2,2:1.

4. Composition aqueuse de liant selon l'une quelconque des revendications 1 à 3, dans laquelle le rapport en poids de l'acide polycarboxylique polymère à l'acide polycarboxylique monomère va de 0,5:1 à 5:1.

5. Composition aqueuse de liant selon l'une quelconque des revendications 1 à 4, dans laquelle le rapport en poids de l'acide polycarboxylique polymère à l'acide polycarboxylique monomère va de 0,9:1 à 2:1.

6. Composition aqueuse de liant selon l'une quelconque des revendications 1 à 5, dans laquelle l'acide polycarboxylique polymère comprend de l'acide polyacrylique.

7. Composition aqueuse de liant selon l'une quelconque des revendications 1 à 6, dans laquelle l'acide polycarboxylique monomère comprend de l'acide citrique.

8. Composition aqueuse de liant selon l'une quelconque des revendications 1 à 7, dans laquelle le polyol monomère comprend du sorbitol.

9. Composition aqueuse de liant selon l'une quelconque des revendications 1 à 8, dans laquelle :
l'acide polycarboxylique polymère comprend de l'acide polyacrylique ;
l'acide polycarboxylique monomère comprend l'acide citrique ; et le polyol monomère comprend du sorbitol.

10. Composition aqueuse de liant selon l'une quelconque des revendications 1 à 9, dans laquelle la composition aqueuse de liant est dépourvue d'alcool polyvinylique.

11. Composition aqueuse de liant selon l'une quelconque des revendications 1 à 10, dans laquelle la composition aqueuse de liant comprend en outre un agent protecteur à base d'azote, dans laquelle l'agent protecteur à base d'azote comprend au moins l'un parmi un agent protecteur à base d'ammonium ou un agent protecteur à base d'amine.

12. Composition aqueuse selon la revendication 1, dans laquelle la composition aqueuse comprend :
de 20 à 40 % en poids de l'acide polycarboxylique polymère ;
de 1 à 30 % en poids de l'acide carboxylique monomère ; et
de 25 à 50 % en poids du polyol monomère ayant au moins trois groupes hydroxyle,
dans laquelle chaque % en poids est basé sur la teneur totale en solides de la composition aqueuse de liant,
dans laquelle le rapport pondéral de l'acide polycarboxylique polymère à l'acide polycarboxylique monomère va de 0,5:1 à 5:1, et
dans laquelle le rapport des équivalents molaires des groupes hydroxyle aux groupes d'acide carboxylique va de 0,5:1 à 2,2:1.

13. Composition aqueuse selon la revendication 12, dans laquelle la composition aqueuse est constituée :
de 20 à 40 % en poids de l'acide polycarboxylique polymère ;
de 1 à 30 % en poids de l'acide polycarboxylique monomère ; et
de 25 à 50 % en poids du polyol monomère ayant au moins trois groupes hydroxyle,
dans laquelle chaque % en poids est basé sur la teneur totale en solides de la composition aqueuse de liant,
dans laquelle le rapport pondéral de l'acide polycarboxylique polymère à l'acide polycarboxylique monomère va de 0,5:1 à 5:1, et
dans laquelle le rapport des équivalents molaires des groupes hydroxyle aux groupes d'acide carboxylique va de 0,5:1 à 2,2:1.

14. Composition aqueuse selon la revendication 1, dans laquelle la composition aqueuse comprend :
de 25 à 35 % en poids de l'acide polycarboxylique polymère ;
de 10 à 28 % en poids d'acide polycarboxylique monomère ; et
de 35 à 45 % en poids du polyol monomère ayant au moins trois groupes hydroxyle,
dans laquelle chaque % en poids est basé sur la teneur totale en solides de la composition aqueuse de liant,
dans laquelle le rapport en poids de l'acide polycarboxylique polymère à l'acide polycarboxylique monomère va de 0,9:1 à 2:1, et
dans laquelle le rapport des équivalents molaires des groupes hydroxyle aux groupes d'acide carboxylique va de 0,5:1 à 2:1.

15. Produit d'isolation fibreux comprenant :
une pluralité de fibres orientées de manière aléatoire ; et
les compositions aqueuses de liant selon l'une quelconque des revendications 1 à 14 revêtant au moins partiellement les fibres.
